# FASCICULE DE BREVET EUROPEEN

(11) **EP 1 479 473 B1**
(45) Date de publication et mention de la délivrance du brevet: **23.07.2008**
(21) Numéro de dépôt: 04291208.9
(22) Date de dépôt: 12.05.2004
(51) Int. Cl.: B23K 26/38, B23K 26/067

(54) **Optique de focalisation pour le coupage laser**
Fokussierungsoptik zum Laserschneiden
Focusing optics for laser cutting

(30) Priorité: 22.05.2003 FR 0306155
(43) Date de publication de la demande: 24.11.2004
(73) Titulaire: L'AIR LIQUIDE, Société Anonyme pour l'Etude et l'Exploitation des Procédés Georges Claude, 75007 Paris (FR)
(72) Inventeur: Camy-Peyret, Frédéric, 92300 Levallois-Perret (FR)
(74) Mandataire: Pittis, Olivier

(56) Documents cités:
- EP-A- 0 741 314
- WO-A-03/052465
- US-B1- 6 175 096

## Description

La présente invention concerne une tête de découpe incluant un élément optique, telle une lentille asphérique particulière, utilisable pour la découpe laser d'un matériau, en particulier de métaux ou alliages métalliques, et un procédé de coupage laser utilisant un tel élément optique.

Le coupage par faisceau laser est un procédé de découpe de matériaux, en particulier de métaux ou alliages métalliques, largement répandu dans l'industrie.

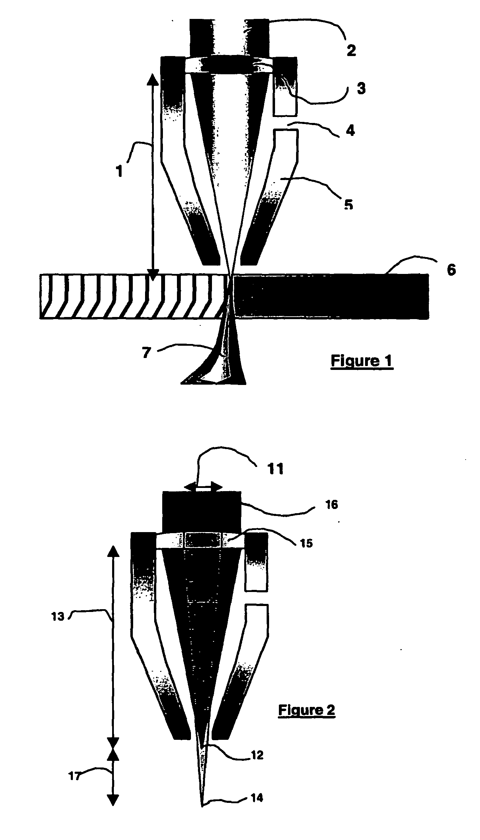

En résumé, la mise en oeuvre de ce procédé implique, comme schématisé sur la figure 1, un faisceau laser 2, par exemple issu d'un laser CO₂ (λ=10,6 µm) ou Nd-YAG (λ=1,06 µm), focalisé par au moins un élément optique 3, du type lentille ou miroir, de longueur focale 1 donnée, jusqu'à une pièce à découper 6.

Un gaz d'assistance est injecté dans la saignée de découpe de manière à évacuer le métal fondu 7, ladite saignée étant crée par déplacement relatif de la tête de découpe par rapport à la pièce 6 à couper.

La tête de découpe comprend l'élément optique de focalisation 3 et une buse 5 de découpe munie d'au moins une entrée 4 de gaz permettant l'injection du gaz de coupe dans la buse 5.

Le gaz introduit dans la tête 5 de coupe en ressort par un ou plusieurs canaux ou orifices d'éjection situés en regard de la pièce 6 à couper, un des dits canaux ou orifices étant généralement aussi traversé par le faisceau laser 2 focalisé, en amont, par l'optique 3 de focalisation.

Différentes formes d'orifices d'éjection du gaz d'assistance, telles les tuyères de Laval ou les tuyères convergentes divergentes à longueur minimum, ainsi que les tuyères à jets coalescents et les dispositifs à double flux de gaz, peuvent être utilisées pour améliorer les performances.

Les optiques de focalisation transmissive, c'est-à-dire les lentilles optiques, sont les éléments optiques les plus couramment utilisés pour la découpe laser, dans la mesure où elle permettent de créer une cavité étanche sous pression dans la tête découpe dans laquelle le gaz d'assistance peut être injecté et sortir ensuite par une tuyère 5 coaxiale au faisceau laser.

Une lentille de focalisation comporte deux dioptres, c'est-à-dire deux faces, sur lesquelles est déposé un revêtement ou traitement anti-réfléchissant de manière à limiter les pertes de puissance par réflexion.

Le matériau du coeur de la lentille est souvent du séléniure de zinc (ZnSe) pour les lasers CO₂ et du verre type "bk7" pour les laser Nd-YAG.

Les différentes formes de lentille principalement utilisées dans l'industrie sont :
- les lentilles piano-convexes composées d'un dioptre sphérique et d'un dioptre plan.
- les lentilles ménisques, composées de deux dioptres sphériques. Cette forme ayant l'avantage de minimiser les aberrations de sphéricité par rapport aux lentilles piano-convexes, elles sont très largement utilisées en découpe laser.
- les lentilles asphériques pour lesquelles la forme du premier dioptre de ces lentilles, qui n'est plus une sphère de rayon constant, est optimisée de manière à réduire encore les aberrations géométriques par rapport à la lentille ménisque à dioptres sphériques et obtenir ainsi de plus grandes densités de puissance au point de focalisation, en particulier dans le cas des longueurs focales courtes, c'est-à-dire inférieures à 95,25 mm (3,75"). Le dioptre de sortie des lentilles asphériques est généralement plan et ce, principalement pour réduire leur coût de fabrication.

Toutes ces lentilles tendent à focaliser le faisceau laser en un point de focalisation unique de taille minimale.

Par ailleurs, un concept d'optiques à plusieurs points de focalisation améliorant les performances du procédé de découpe laser a été présenté dans le document WO 98/14302.

La forme de ces optiques, de type lentille ou miroir, est telle que le faisceau incident n'est plus focalisé en un seul point mais en deux points de focalisation ou plus, comme schématisé en Figure 2.

Selon ce document, lorsqu'on utilise une lentille à double focale 15, la partie du faisceau incident 16 située à l'extérieur d'un diamètre 11 est focalisée en un premier point 12 focal situé à une longueur focale principale 13, alors que la partie du faisceau incident située à l'intérieur du diamètre 11 est, quant à elle, focalisée en un deuxième point focal 14, situé à une distance 17 après le premier point focal 12 dans le sens de la propagation de la lumière du faisceau.

Cette lentille à double point de focalisation est réalisée avec un rayon de courbure d'un des dioptres, celui de la face convexe par exemple, différent à l'intérieur et à l'extérieur du diamètre 11.

Ce type d'optique de focalisation permet d'obtenir des gains de vitesse et/ou de qualité de coupe, voire de tolérance du procédé par rapport aux variations de la distance entre la lentille et la pièce et/ou de capacité à couper des matériaux plus épais que les lentilles conventionnelles à un seul point de focalisation.

Cependant, les caractéristiques du champ de densité de puissance donné par une lentille bifocale restent encadrés par le choix discret du nombre de points de focalisation.

Les rayons de courbures du premier dioptre étant constants par intervalles, les lentilles et miroirs bi- ou mufti-focaux actuels ne permettent pas un ajustement optimisé de la lentille aux caractéristiques du faisceau et à l'application du client.

Les gains de productivité obtenus par rapport aux lentilles monofocales, c'est-à-dire les lentilles classiques selon la Figure 1, sont liés à une répartition de la puissance et de la densité de puissance dans la saignée de découpe qui présentent deux ou plusieurs maxima le long de l'axe optique mais cette répartition de l'énergie n'est pas optimale car elle n'est pas continue sur toute l'épaisseur de la pièce.

D'autre part, les optiques bifocales ou multifocales utilisées en découpe laser sont sensibles aux variations de diamètre du faisceau car la répartition de la puissance entre les différents points de focalisation dépend du diamètre du faisceau.

Les optiques monofocales sont aussi sensibles aux variations de faisceau car une modification de la divergence du faisceau incident peut engendrer une modification de la position du point de focalisation, ce qui rend le procédé peu tolérant et entraîne des difficultés à maintenir la qualité de la découpe constante, par exemple lorsque la tête de découpe se déplace et que la longueur du chemin optique entre le laser et la tête est variable.

Le problème qui se pose alors, est de proposer une optique de focalisation améliorée de manière à permettre, lors de son utilisation dans un procédé de coupage par faisceau laser, une meilleure répartition de l'énergie apportée à la pièce à découper, c'est-à-dire dans la saignée de coupe, et donc de permettre aussi des gains de productivité par rapport aux optiques monofocales et multifocales classiques.

La solution de l'invention est alors une tête de découpe incluant un élément optique, utilisable pour la découpe laser d'un matériau, comportant au moins un dioptre asphérique conformé pour focaliser les rayons du faisceau incident sur un segment de droite situé sur l'axe optique de l'élément optique.

Dans le cadre de l'invention :
- par segment de droite, on entend que le faisceau laser se focalise en une zone constituée d'une infinité de points alignés de manière à former une zone linéaire continue de focalisation, c'est-à-dire une portion de droite, d'une longueur pouvant aller de 0.01 mm à 50 mm, délimitée par deux points à ses extrémités.
- par axe optique, on entend l'axe de symétrie de la lentille et celui du faisceau laser incident, généralement alignés et formant une seule droite de l'espace appelée axe optique.

Selon le cas, l'élément optique de l'invention peut comprendre l'une ou plusieurs des caractéristiques techniques données ci-après :
- il est de type transmissif ou réfléchissant.
- le segment de droite sur lequel se focalise le faisceau a une longueur de 0.01 à 50 mm, de préférence de l'ordre de 1 à 20 mm selon l'épaisseur et la nature du matériau.
- il est formé d'une lentille dont le dioptre asphérique (i.e. côté incident, c'est-à-dire le dioptre qui est impacté en premier par le faisceau) est défini par un rayon de courbure continûment variable en fonction de la distance à l'axe optique de la lentille.
- il est formé d'une lentille dont le dioptre de sortie est plan.
- il est formé d'une lentille ayant un diamètre compris entre 4 mm et 60 mm.

L'invention porte aussi sur un procédé de coupage par faisceau laser d'un matériau, dans lequel on met en oeuvre au moins un élément optique selon l'invention pour focaliser ledit faisceau laser.

Selon le cas, le procédé de l'invention peut comprendre l'une ou plusieurs des caractéristiques techniques données ci-après :
- l'élément optique focalise le faisceau laser sur un segment de droite situé sur l'axe optique dudit élément optique et dans l'épaisseur du matériau à couper.
- le segment de droite a une longueur égale ou approximativement égale à l'épaisseur du matériau à découper.
- le rayon du faisceau incident arrivant au centre de la lentille est focalisé à proximité de la face inférieure du matériau à découper et le rayon arrivant à la périphérie de la lentille est focalisé à proximité de la face supérieure du matériau à découper. En procédant ainsi, on peut obtenir une focalisation dans toute l'épaisseur du matériau à couper, le segment de droite sur lequel se focalise les rayons du faisceau laser étant alors confondu avec l'axe de l'élément optique et a une longueur égale à toute l'épaisseur de la pièce à couper.
- le lieu des points d'intersection des rayons du faisceau incident avec l'axe optique forme un segment de focalisation sur lequel l'énergie du faisceau laser est distribuée de manière continue sur ledit segment.
- on assiste le faisceau laser au moyen d'un gaz d'assistance contenant au moins un composé choisi parmi l'azote, l'oxygène, l'hélium, l'argon et leurs mélanges, par exemple des mélanges binaires, ternaires, quaternaires ou autres, tels des mélanges azote/oxygène, argon/hélium, azote/hélium, azote/argon/oxygène..., lesquels peuvent comprendre d'autres constituants, en particulier de l'hydrogène, du CO₂ ... ledit gaz à utiliser étant choisi en fonction de la nature du métal ou de l'alliage à découper.

Autrement dit, l'invention utilise un élément optique pour la découpe laser des matériaux qui peut être transmissif, telle une lentille, ou réfléchissant, tel un miroir, et qui comporte au moins un dioptre asphérique focalisant les rayons du faisceau incident sur un segment de droite situé sur l'axe optique.

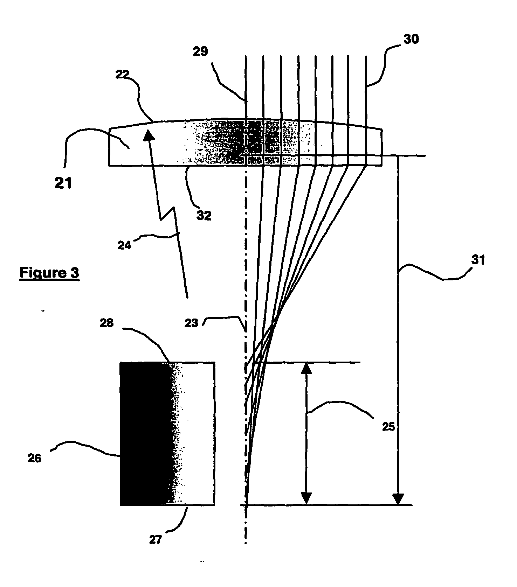

Dans le cas d'une optique transmissive comme la lentille 21 schématisée sur la Figure 3, le dioptre 22 est défini par un rayon de courbure 24 continûment variable en fonction de la distance à l'axe 29 optique de la lentille de manière à focaliser les rayons incident arrivant sur la lentille sur un segment de droite 25 situé sur l'axe optique 29 de la lentille.

Ce segment peut être d'une longueur proche de l'épaisseur du matériau à découper 26. Pour ce faire, le rayon 29 du faisceau incident arrivant au centre de la lentille peut avantageusement être focalisé à proximité de la face inférieure 27 de l'élément à découper et le rayon 30 arrivant à la périphérie de la lentille pourra être focalisé à proximité de la face supérieure 28 de la pièce à découper.

Le lieu des points d'intersection des rayons du faisceau incident avec l'axe optique forme un segment de focalisation 25 sur lequel l'énergie du faisceau est distribuée de manière continue.

Le dioptre de sortie 32 de la lentille présentée dans l'exemple de la figure 3 peut être plan pour réduire les coûts de fabrication.

On notera que l'optique à focalisation linéaire selon la présente invention est distincte des optiques à dioptres asphériques connues dans la mesure où l'objectif poursuivi n'est pas de focaliser le faisceau sur une surface la plus faible possible, limitée seulement par la diffraction ou par la qualité du faisceau, mais bien de répartir le faisceau incident de manière continue sur un segment de focalisation situé sur l'axe optique.

La répartition de l'énergie apportée à la pièce à découper est de cette façon mieux répartie dans la saignée et permet des gains de productivité par rapport aux optiques monofocales et multifocales.

De même, la présente invention diffère aussi des optiques multi-focales présentées dans le document WO-A-98/14302, dans la mesure où elle génère un segment de focalisation sur lequel l'intensité du faisceau laser est répartie de manière continue, et non pas un nombre discret de points de focalisation successifs.

Selon l'invention, la distribution du faisceau incident sur le segment de focalisation est déterminée par la forme du dioptre asphérique et en particulier par la fonction (continue) de son rayon de courbure en fonction de la distance à l'axe optique. Cette fonction peut être adaptée à l'épaisseur et à la nature du matériau à découper, ainsi qu'au profil de distribution de la densité de puissance lumineuse du faisceau incident.

On peut en particulier définir ce dioptre asphérique de sorte que le rayon de courbure du dioptre soit une fonction de la répartition radiale de la densité de puissance du faisceau incident de manière à obtenir :
- une densité de puissance homogène sur le segment de focalisation.
- une densité de puissance sur le segment de focalisation présentant un maximum à proximité de chacune des faces supérieure et inférieure de la pièce.

Les faisceaux laser utilisés dans l'industrie sont fréquemment de diamètre et de divergence variables. En particulier, dans le cas des têtes de focalisation mobiles, la longueur du chemin optique, donc le diamètre et la divergence du faisceau, dépendent de la position de la tête sur la table de découpe.

Un avantage de l'optique de l'invention schématisée en Figure 3 est que les variations du diamètre du faisceau influent moins sur la répartition de la puissance et de la densité de puissance dans la saignée de découpe que les systèmes bi-focaux ou mufti-focaux connus.

En effet, la variation du diamètre du faisceau engendre une variation continue de la fonction de distribution de la puissance sur le segment de focalisation et permet d'obtenir une plus grande tolérance vis à vis de cette variable.

Les variations de la divergence du faisceau incident influencent aussi moins la qualité de la découpe que dans le cas des lentilles monofocales.

En effet, l'énergie étant distribuée continûment sur un segment vertical, le déplacement sur l'axe optique de ce segment de focalisation par rapport à la pièce, lorsque la divergence du faisceau incident varie, a moins de conséquences sur la densité de puissance transmise à la pièce que lorsque l'énergie est concentrée en un unique point focal dont la position par rapport à la pièce est un paramètre prépondérant pour l'obtention de bonnes performances.

L'utilisation d'une optique à rayon de courbure progressif selon l'invention permet donc d'augmenter les gains de productivité, par exemple la vitesse de découpe, jusqu'aux limites du procédé de coupage sans craindre une perte brutale de la qualité de coupe, voire une perte totale de la découpe comme il arrive avec l'utilisation d'optiques monofocales, et dans une moindre mesure bi ou multi-focale.

De façon générale, l'élément optique de l'invention peut être formé d'une lentille 21 dont le dioptre 22 asphérique est défini par une équation comprenant un terme dépendant de la distance à l'axe optique (29 de manière logarithmique, à titre d'exemple non limitatif, par l'équation *B*² *Cr*=*A*ln *A*+*Bz*-*A*ln(*A*+*Bz*) où les couples (*r,z*) vérifiant l'équation forment l'ensemble des coordonnées des points définissant le dioptre dans un repère d'axes orthonormés (*̅r̅*̅,*̅z̅*̅) où *̅r̅*̅ est le vecteur radial unitaire perpendiculaire à l'axe optique, où *̅z̅*̅ est le vecteur axial unitaire colinéaire à l'axe optique et où *A,B* et *C* sont des constantes dépendantes du faisceau incident, du matériau et de l'application.

De façon alternative, l'élément optique de l'invention peut aussi être formé d'une lentille 21 dont le dioptre 22 asphérique est défini par l'équation d'une conique, à titre d'exemple non limitatif par l'équation *r*² +*Pz*² -2*Rz* = 0 où les couples (*r,z*) vérifiant l'équation forment l'ensemble des coordonnées des points définissant le dioptre dans un repère d'axes orthonormés (*̅r̅*̅,*̅z̅*̅), où *̅r̅*̅ est le vecteur radial unitaire perpendiculaire à l'axe optique, où *̅z̅*̅ est le vecteur axial unitaire colinéaire à l'axe optique et où *P* et *R* sont des constantes dépendantes du faisceau incident, du matériau et de l'application.

Dans tous les cas, on choisit des valeurs numériques résolvant l'une ou l'autre des équations ci-avant telles que le dioptre asphérique conduise à obtenir une focalisation d'un segment continu selon l'invention.

Dans le cadre de l'invention, on peut utiliser les gaz ou mélanges donnés dans le tableau suivant pour couper les matériaux indiqués en vue notamment d'obtenir un effet positif sur la vitesse de coupe ou la qualité de la coupe.

**Tableau :Associations gaz/matériau à couper**

| Matériaux | Oxygène | Azote | Argon | Hélium |
|---|---|---|---|---|
| Aciers faiblement alliés | OUI / vitesse | OUI / qualité | Possible | Possible |
| Aciers inoxydables | OUI / vitesse | OUI / qualité | Possible | Possible |
| Alliages d'aluminium | OUI / vitesse | OUI / qualité | Possible | Possible |
| Alliages au nickel | OUI / vitesse | OUI / qualité | Possible | Possible |
| Alliages de titane | déconseillé | déconseillé | OUI / qualité | OUI /qualité |

Bien entendu, certains mélanges de gaz pourront aussi être utilisés en lieu et place des gaz listés dans le Tableau ci-dessus de manière à tirer partie des propriétés des composés du mélange ainsi obtenu, par exemple pour couper un acier inoxydable, on peut utiliser un mélange d'oxygène et d'azote lorsqu'on souhaite accroître la vitesse et la qualité de coupe par rapport à de l'azote seul ou à de l'oxygène seul.

De même, les gaz donnés dans le tableau ci-avant pourront être associés à d'autres composés gazeux dont l'action peut être bénéfique pour la découpe d'un matériau particulier, par exemple des mélanges d'azote ou d'argon additionnés d'hydrogène (à moins de 30% en volume) pourront être mis en oeuvre pour couper de l'acier inoxydable de manière à obtenir des faces de coupe exemptes de bavures et brillantes (sans oxydes déposés), c'est-à-dire de bonne qualité.

Dans le cadre de l'invention, l'ensemble des différents modes de distribution du gaz d'assistance utilisés pour améliorer les performances de coupe et décrits précédemment peuvent être utilisés.

### Exemple de réalisation

Dans l'exemple suivant, une lentille selon la présente invention est utilisée pour découper une tôle d'aluminium de nuance AUG4 et d'épaisseur 6 mm avec faisceau laser de type CO₂ de puissance 4 kW dont le mode transverse de répartition d'intensité est Gaussien (Mode transverse électromagnétique 00) avec un diamètre incident sur la lentille de 14 mm à 86% de la puissance.

La lentille a un dioptre de sortie plan et un dioptre d'entrée asphérique dont la surface est un ellipsoïde de révolution focalisant le faisceau incident sur un segment de droite de l'ordre de 5 mm de longueur.

L'extrémité inférieure de ce segment se situe à environ 127 mm du dioptre de sortie de la lentille de diamètre égal à approximativement 38,1 mm et d'épaisseur aux bords d'environ 7,6 mm.

Les faces de la lentilles sont recouvertes d'un traitement anti-réfléchissant conforme à l'état de l'art.

Le gaz utilisé pour la découpe est de l'azote injecté sous une pression relative de 15 bars dans une buse de 2 mm de diamètre.

L'utilisation de cette lentille comparée à celle d'une lentille monofocale de longueur focale classique 190 mm permet d'obtenir une vitesse de coupe de l'ordre de 2,4 m/min, soit un gain d'environ 33 % par rapport à la vitesse de 1,8 m/min obtenue avec une lentille monofocale.

Par rapport à une lentille bi-focale de diamètre extérieur 38,1mm (focalisant le faisceau en 2 points distincts espacés l'une de l'autre), de longueur focale principale 190 mm et de distance entre les deux points focaux de 7,5 mm, pour laquelle la vitesse de coupe obtenue est de 2,15 m/min, les gains de vitesse sont d'environ 12%.

## Revendications

1. Tête de découpe comprenant un élément optique (21) utilisable pour la découpe laser d'un matériau, ledit élément optique comportant au moins un dioptre asphérique (22) conformé pour focaliser les rayons (30) d'un faisceau incident sur un segment de droite (25) situé sur l'axe optique (29) de l'élément (21) optique.

2. Tête de découpe selon la revendication 1, **caractérisé en ce que** l'élément optique est de type transmissif (21) ou réfléchissant.

3. Tête de découpe selon l'une des revendications 1 ou 2, **caractérisé en ce que** le segment de droite (25) a une longueur de 0.01 à 50 mm, de préférence de l'ordre de 1 à 20 mm.

4. Tête de découpe selon l'une des revendications 1 à 3, **caractérisé en ce que** l'élément optique est formé d'une lentille (21) dont le dioptre (22) asphérique est défini par un rayon de courbure (24) continûment variable en fonction de la distance à l'axe optique (29) de la lentille.

5. Tête de découpe selon l'une des revendications 1 à 4, **caractérisé en ce que** l'élément optique est formé d'une lentille (21) dont le dioptre de sortie (32) est plan.

6. Tête de découpe selon l'une des revendications 1 à 5, **caractérisé en ce que** l'élément optique est formé d'une lentille (21) ayant un diamètre compris entre 4 mm et 60 mm

7. Procédé de coupage par faisceau laser d'un matériau, dans lequel on met en oeuvre au moins une tête de découpe selon l'une des revendications 1 à 6 pour focaliser ledit faisceau laser.

8. Procédé de coupage selon la revendication 7, **caractérisé en ce que** l'élément optique (21) focalise le faisceau laser sur un segment de droite (25) situé sur l'axe optique (29) dudit élément optique (21) et dans l'épaisseur du matériau (26) à couper.

9. Procédé de coupage selon l'une des revendications 7 ou 8, **caractérisé en ce que** le segment de droite (25) a une longueur égale ou approximativement égale à l'épaisseur du matériau (26) à découper.

10. Procédé de coupage selon l'une des revendications 7 à 9, **caractérisé en ce que** le rayon du faisceau incident arrivant au centre (29) de la lentille (21) est focalisé à proximité de la face inférieure (27) du matériau (26) à découper et le rayon (30) arrivant à la périphérie de la lentille (21) est focalisé à proximité de la face supérieure (28) du matériau (26) à découper.

11. Procédé de coupage selon l'une des revendications 7 à 10, **caractérisé en ce que** le lieu des points d'intersection des rayons du faisceau incident avec l'axe optique (29) forme un segment de focalisation (25) sur lequel l'énergie du faisceau laser est distribuée de manière continue sur ledit segment (25).

12. Procédé de coupage selon l'une des revendications 7 à 11, **caractérisé en ce qu'**on assiste le faisceau laser au moyen d'un gaz d'assistance contenant au moins un composé choisi parmi l'azote, l'oxygène, l'hélium, l'argon et leurs mélanges.

## Claims

1. Cutting head comprising an optical component (21), which can be used for the laser cutting of a material, said optical component comprising at least one aspherical refractive surface (22) shaped to focus the rays (30) of an incident beam onto a straight line segment (25) lying on the optical axis (29) of the optical component (21).

2. Cutting head according to Claim 1, **characterized in that** the optical component is of the transmissive type (21) or reflective type.

3. Cutting head according to either of Claims 1 and 2, **characterized in that** the straight line segment (25) has a length of 0.01 to 50 mm, preferably around 1 to 20 mm.

4. Cutting head according to one of Claims 1 to 3, **characterized in that** the optical component is formed by a lens (21) whose aspherical refractive surface (22) is defined by a radius of curvature (24) that varies continuously with the distance from the optical axis (29) of the lens.

5. Cutting head according to one of Claims 1 to 4, **characterized in that** the optical component is formed by a lens (21) whose exit refractive surface (32) is plane.

6. Cutting head according to one of Claims 1 to 5, **characterized in that** the optical component is formed by a lens (21) having a diameter between 4 mm and 60 mm.

7. Process for the laser cutting of a material, in which at least one cutting head according to one of Claims 1 to 6 is used to focus the said laser beam.

8. Cutting process according to Claim 7, **characterized in that** the optical component (21) focuses the laser beam onto a straight line segment (25) lying on the optical axis (29) of the said optical component (21) and within the thickness of the material (26) to be cut.

9. Cutting process according to either of Claims 7 and 8, **characterized in that** the straight line segment (25) has a length equal or approximately equal to the thickness of the material (26) to be cut.

10. Cutting process according to one of Claims 7 to 9, **characterized in that** the ray of the incident beam arriving at the centre (29) of the lens (21) is focused close to the underside (27) of the material (26) to be cut and the ray (30) arriving at the periphery of the lens (21) is focused close to the top side (28) of the material (26) to be cut.

11. Cutting process according to one of Claims 7 to 10, **characterized in that** the locus of the points of intersection of the rays of the incident beam with the optical axis (29) forms a focusing segment (25), the energy of the laser beam being distributed continuously along the said segment (25).

12. Cutting process according to one of Claims 7 to 11, **characterized in that** the laser beam is assisted by means of an assistance gas containing at least one component chosen from nitrogen, oxygen, helium, argon and mixtures thereof.

## Patentansprüche

1. Schneidkopf, welcher ein optisches Element (21) aufweist, das für das Laserschneiden eines Materials verwendbar ist, wobei das optische Element mindestens ein asphärisches Diopter (22) aufweist, das so gestaltet ist, dass es die Strahlen (30) eines Bündels fokussiert, das auf einen Geradenabschnitt (25) einfällt, der sich auf der optischen Achse (29) des optischen Elements (21) befindet.

2. Schneidkopf nach Anspruch 1, **dadurch gekennzeichnet, dass** das optische Element vom durchlässigen (21) oder reflektierenden Typ ist.

3. Schneidkopf nach einem der Ansprüche 1 oder 2, **dadurch gekennzeichnet, dass** der Geradenabschnitt (25) eine Länge von 0,01 bis 50 mm, vorzugsweise in der Größenordnung von 1 bis 20 mm hat.

4. Schneidkopf nach einem der Ansprüche 1 bis 3, **dadurch gekennzeichnet, dass** das optische Element von einer Linse (21) gebildet wird, deren asphärisches Diopter (22) durch einen Krümmungsradius (24) definiert ist, der in Abhängigkeit vom Abstand von der optischen Achse (29) der Linse stetig variabel ist.

5. Schneidkopf nach einem der Ansprüche 1 bis 4, **dadurch gekennzeichnet, dass** das optische Element von einer Linse (21) gebildet wird, deren Austrittsdiopter (32) eben ist.

6. Schneidkopf nach einem der Ansprüche 1 bis 5, **dadurch gekennzeichnet, dass** das optische Element von einer Linse (21) gebildet wird, die einen Durchmesser aufweist, der zwischen 4 mm und 60 mm beträgt.

7. Verfahren zum Schneiden eines Materials mit einem Laserbündel, bei welchem mindestens ein Schneidkopf nach einem der Ansprüche 1 bis 6 eingesetzt wird, um das Laserbündel zu fokussieren.

8. Schneidverfahren nach Anspruch 7, **dadurch gekennzeichnet, dass** das optische Element (21) das Laserbündel auf einen Geradenabschnitt (25) fokussiert, der sich auf der optischen Achse (29) des optischen Elements (21) und in der Dicke des zu schneidenden Materials (26) befindet.

9. Schneidverfahren nach einem der Ansprüche 7 oder 8, **dadurch gekennzeichnet, dass** der Geradenabschnitt (25) eine Länge aufweist, die gleich oder annähernd gleich der Dicke des zu schneidenden Materials (26) ist.

10. Schneidverfahren nach einem der Ansprüche 7 bis 9, **dadurch gekennzeichnet, dass** der Strahl des einfallenden Bündels, der im Mittelpunkt (29) der Linse (21) ankommt, in der Nähe der Unterseite (27) des zu schneidenden Materials (26) fokussiert wird und der Strahl (30), der an der Peripherie der Linse (21) ankommt, in der Nähe der Oberseite (28) des zu schneidenden Materials (26) fokussiert wird.

11. Schneidverfahren nach einem der Ansprüche 7 bis 10, **dadurch gekennzeichnet, dass** der geometrische Ort der Schnittpunkte des einfallenden Bündels mit der optischen Achse (29) einen Fokussierungsabschnitt (25) bildet, wobei die Energie des Laserbündels auf kontinuierliche Weise auf dem Abschnitt (25) verteilt wird.

12. Schneidverfahren nach einem der Ansprüche 7 bis 11, **dadurch gekennzeichnet, dass** das Laserbündel mittels eines Hilfsgases unterstützt wird, das mindestens eine Verbindung enthält, die aus Stickstoff, Sauerstoff, Helium, Argon und deren Gemischen gewählt ist.
